Europäisches Patentamt

European Patent Office

Office européen des brevets

(11) Veröffentlichungsnummer: **0 163 840**
**B1**

(12) # EUROPÄISCHE PATENTSCHRIFT

(45) Veröffentlichungstag der Patentschrift:
**28.12.88**

(51) Int. Cl.⁴: **A 01 G 7/00**

(21) Anmeldenummer: **85103898.4**

(22) Anmeldetag: **01.04.85**

(54) **Herstellung und Verwendung von Adsorbentien zur Inokulation von Pflanzen mit vesikulär-arbuskulären Mykorrhizapilzen.**

(30) Priorität: **03.05.84 DE 3416315**

(43) Veröffentlichungstag der Anmeldung:
**11.12.85 Patentblatt 85/50**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**EP-A- 0 092 990**
**EP-A- 0 092 991**
**WO-A-81/03338**

(73) Patentinhaber: **IBL International Biotechnology Laboratories GmbH, Im Neuenheimer Feld 517, D-6900 Heidelberg 1 (DE)**

(72) Erfinder: **Baltruschat, Helmut, Dr., Am Hagenbach 3, D-4405 Nottuln-Darup (DE)**
Erfinder: **Dehne, Heinz-Wilhelm, Dr., Zum Auhof 8, D-3061 Ahnsen (DE)**

(74) Vertreter: **Ratzel, Gerhard, Dr., Seckenheimer Strasse 36a, D-6800 Mannheim 1 (DE)**

## Beschreibung

Die Erfindung betrifft ein Inokulum-Trägermaterial zur Inokulation von Pflanzen mit vesikulär-arbuskulären Mykorrhizapilzen, sowie dessen Herstellung und Verwendung.

Die Steigerung der Erträge durch Entwicklung immer neuerer Düngemittel ist ein Schwerpunkt der landwirtschaftlichen Forschung in den letzten Jahrzehnten gewesen. Die heute vorliegenden Ergebnisse lassen den Schluss zu, dass die Erträge in Regionen mit intensiver landwirtschaftlicher Bewirtschaftung durch erhöhte Düngergaben oder Entwicklung neuartiger Düngemittel nicht mehr wesentlich gesteigert werden können.

Unter diesen Umständen kommt der besseren Ausnutzung der Düngergaben und der Erhöhung der Widerstandskraft von Kulturpflanzen gegenüber ungünstigen Wachstumsbedingungen eine erhöhte Bedeutung zu. Das Bemühen der landwirtschaftlichen Forschung geht dahin, einerseits ein hohes Ertragsniveau zu sichern und andererseits Ertragseinbussen, die durch ungünstige Entwicklungsbedingungen, beispielsweise längere Trockenperioden, grössere Temperaturschwankungen, Einflüsse verschiedener Schaderreger oder ungünstige Standort- und Witterungsbedingungen verursacht werden, möglichst gering zu halten.

Es ist bekannt, dass Pflanzen, deren Wurzeln mit vesikulär-arbuskulären Mykorrhizapilzen besetzt sind, gegenüber diesen ungünstigen Wachstumsbedingungen wesentlich widerstandsfähiger sind als mykorrhizafreie Pflanzen (vgl. J.L. Harley, S.E. Smith, «Mycorrhizal Symbiosis», Academic Press 1983). Man könnte daher ganz allgemein daran denken, diesen Effekt wirtschaftlich auszunutzen.

Vesikulär-arbuskuläre Mykorrhizapilze sind obligat-biotrophe Organismen, d.h., Pilze, die in ihrer Entwicklung auf die Infektion einer lebenden Wirtspflanze angewiesen sind. Arten, Lebensformen und Entwicklungsvorgänge der vesikulär-arbuskulären Mykorrhizapilze sind ausführlich in diesem Standardwerk beschrieben.

Typisch für das Zusammenleben von Pilz und Pflanze ist, dass beide Partner aus der symbiotischen Lebensgemeinschaft Nutzen ziehen. Der Nutzen für die Pflanze wird daraus ersichtlich, dass die ökologische Breite einer Pflanzenart bei Mykorrhizainfektion erweitert wird. Für den Pilz andererseits ist diese Form des Zusammenlebens unter natürlichen Bedingungen essentiell.

Unter extremen Bedingungen kann die Infektion mit dem Mykorrhizapliz für eine Wirtspflanze lebensnotwendig sein. Unter ungünstigen Wachstumsbedingungen führt die Infektion zu einer verbesserten Entwicklung der Wirtspflanze.

In Gartenbau, Land- und Forstwirtschaft konnte der leistungssteigernde Einfluss dieser Symbiose eindeutig nachgewiesen werden. Als Beispiele im Gartenbau lassen sich Effekte anführen, die von der verbesserten Stecklingsbewurzelung bis hin zur beschleunigten Blühinduktion reichen. Qualitative sowie quantitative Ertragszuwächse wurden in landwirtschaftlichen Kulturen, wie Citrus, Getreide, Mais, Gemüse, Soja, Baumwolle u.a., beobachtet. Schliesslich führt die Symbiose in der Forstwirtschaft beispielsweise zu einer schnelleren und intensiveren Bewurzelung von Baumschulgehölzen (vgl. die Artikel von D.S. Hayman, H.-W. Dehne sowie D.E. Carling et al. in Phytopathology 72, 1108–1125 (1982); siehe auch E. Schönbeck und H.-W. Dehne, Gesunde Pflanzen 33, 186–190 (1981) und C. Clarke, B. Mosse, New Phytol. 87, 695–703 (1981).

Die praktische Ausnutzung der bekannten positiven Wirkungen der vesikulär-arbuskulären Mykorrhizapilze scheiterte bisher an der Handhabung dieser Pilze. Es gab bisher keine praktikable Methode der Anreicherung und Konservierung von Mykorrhizapilzen. Nach dem Stand der Technik (vgl. J.A. Menge, Can. J. Botany 61, 1015–1024 (1983) gibt es lediglich einen Verfahrensentwurf, nach dem im übrigen nur auf sehr umständliche Weise kontaminationsarme Kulturen hergestellt werden könne, die unmittelbar vor ihrer Anwendung mit Pflanzenschutzmitteln behandelt werden müssen. Der Verfahrensentwurf, der auf den Anbau von Citrusfrüchten beschränkt ist, ist sehr aufwendig in Bezug auf Herstellung und Bereitstellung des Inokulums. Eine Standardisierung, die eine Erfolgskontrolle ermöglichen würde, ist so gut wie ausgeschlossen. Herkömmliche Inokula sind generell unhandlich, kaum anzureichern, nur mit grossen Schwierigkeiten konservierbar und in der Regel schlecht und ungenau applizierbar.

Diese Bewertung gilt auch für Versuche zur quasi-axenischen Kultur von Mykorrhizapilzen (vgl. C.M. Hepper, New Phytologist 88, 641–647 (1981) sowie 93, 537–542 (1983). Die wissenschaftlichen Untersuchungen zur Infektion von Pflanzen mit Mykorrhizapilzen in geschlossenen sterilen Hydrokultursystemen (vgl. R.M. MacDonald, New Phytologist 89, 87–93 (1981) erfordern eine aufwendige Apparatur und sind schon aus diesem Grunde für die landwirtschaftliche Praxis nicht geeignet.

In der Literatur werden verschiedene Verfahren zur Inokulation von Pflanzen mit vesikulär-arbuskulären Mykorrhizapilzen beschrieben:

1. Verpflanzen mykorrhizahaltiger, unter kontrollierten Bedingungen vorgezogener Pflanzen in die zu inokulierende Kultur

   Dieses Verfahren wird empfohlen u.a. für Baumschulquartiere von Kaffee, Tee, Kakao, Papaya und Palmen. Diese Technik wird als die bislang wirkungsvollste Methode zur Feldinokulation angesehen (D.S. Hayman in S. Rao «Advances in Agricultural Microbiology», 1981, Seiten 344–345).

2. Direktes Einbringen von Boden aus mykorrhizahaltigen Topfkulturen in Saatreihen

   Dieses Inokulum besteht aus Sporen und Hyphen der Mykorrhizapilze bzw. mykorrhizahaltigen Wurzelstückchen. Es wurde bislang vor allem in entseuchten Böden, die frei von einem natürlichen Mykorrhizainokulum waren, mit Erfolg angewendet. Von diesem Inokulum müssten bei grossflächiger Anwendung ca. 2 bis 3 Tonnen pro Hektar des mykorrhizahaltigen Bodens aus Topfkulturen angebracht werden, so dass eine breite Anwendung eines derartigen Verfahrens in der Praxis für aussichtslos gehalten wird (E. Owusu-Bennoah und B. Mosse, New Phytologist 83, 671–679 (1979).

3. Ausbringen eines Inokulums in einem viskosen Medium (z.B. 4% Methylcellulose) als Flüssig-Drillverfahren

Dabei werden Siebfraktionen (50 bis 200 μm) eines Bodens aus mykorrhizahaltigen Topfkulturen von Hand unter dem Stereomikroskop soweit von organischen Bestandteilen befreit, dass sie lediglich feine Bodenpartikel der entsprechenden Korngrösse, wie Sporen und Myzelien der Mykorrhizapilze, enthalten. Diese Fraktionen werden in dem viskosen Medium zusammen mit gekeimten Samen der Kultur vermischt und mit speziellen Geräten in Reihen ausgesät (D.S. Hayman, K.A. Hampson, «Rothamsted Report for 1978», Part I, Seiten 238–239 (1979).

4. Inkrustierung des Saatgutes mit einem Mykorrhizainokulum

Dabei werden sowohl Sporen als auch kleine, mykorrhizahaltige Wurzelstückchen verwendet, die in Methylcellulose auf das Saatgut aufgebracht wurden. Es hat sich gezeigt, dass die Sporen der Mykorrhizapilze aufgrund ihrer Grösse nur schwer auf der Oberfläche des Saatgutes haften. Zwar wird auf diese Weise der Pilz auf dem Saatkorn fixiert; jedoch dringen die Keimwurzeln sehr schnell in den Boden ein und breiten sich dort aus, ohne weiter mit dem Pilz in Berührung zu kommen. Erfolgreich beschrieben wurde die Anwendung dieses Verfahrens lediglich für Topfkulturen und Citrussämlinge in Baumschulen (M.J. Hattingh, J.W. Gerdemann, Phytopathology 65, 1013–1016 (1975). Ein wesentlicher Nachteil dieses Verfahrens ist die infolge Sauerstoffmangel behinderte Keimung des Saatgutes.

5 Ausbringen des Inokulums in Pellets

Es werden Pellets aus einer Mischung von infiziertem Boden oder Siebfraktionen aus Dauerkulturen mit organischem Material, insbesondere Torf, gemischt und geformt. Diese können dann im Vor- und Nachsaatverfahren oder gemeinsam mit dem Saatgut in den Boden eingebracht werden. Nachteilig ist, dass Pathogene nicht abtrennbar sind (vgl. D.S. Hayman, E.J. Morris und R.J. Page, Annals of Appl. Biology, 1981 eingereicht; siehe Artikel von Hayman in «Advances in Agricultural Microbiology»).

6. Ausbringung von mykorrhizahaltigem Freilandboden

Die obere Bodenschicht ausgewählter Felder, in denen zuvor Pflanzen wuchsen, die eine intensive Mykorrhizabildung aufwiesen, wird abgetragen und auf anderen Flächen als Inokulum aufgebracht.

In jüngster Zeit wurde ein Verfahren publiziert, bei dem mit Hilfe von mykorrhizahaltigen Wurzeln Böden oder Pflanzen mit dem Symbionten inokuliert werden (vgl. EP-A-0 015 103). Entscheidend ist, dass die Pflanzen in einer Nährfilmkultur gezogen werden. Dies bedeutet, dass die Pflanzenwurzeln ständig von einer konstanten Nährlösung umspült werden müssen. Auf Änderungen der Nährsalzkonzentration und des osmotischen Wertes reagiert die Pflanze sehr empfindlich. Die erforderlichen technischen Einrichtungen zur Durchführung der NF-Kulturtechnik sind daher sehr anspruchsvoll und aufwendig. Es besteht zudem die erhöhte Gefahr des Auftretens wasserliebender Pathogene, die, wenn sie einmal an der Wurzel haften, zusammen mit dem Symbionten verbreitet werden (vgl. B. Mosse, J.P. Thompson, Can. J. Bot. 62, 1523 (1984) sowie R.P. Elmes, B. Mosse, Can. J. Bot. 62, 1530 (1984).

Zum Stand der Technik sind weiterhin die folgenden Druckschriften zu nennen.

Die EP-A-0 092 991 beschreibt ein Kultursubstrat zur Inokulation von Pflanzen mit VA-Mykorrhizapilzen aus einem adsorbierenden Material, nämlich Torf.

Die US-A-4 327 181 (entsprechend der WO-A-81/0338) beschreibt das Anziehen von Ektomykorrhiza-Pflanzen (vesikulär-arbuskuläre Mykorrhiza-Pilze sind Endomykorrhiza-Pilze) in einem Nährmedium, dem man inerte Materialien (wie z.B. Vermiculit) zugesetzt hat, um dieses in eine feste Form überzuführen.

Die US-A-4 551 165 (entsprechend der EP-A-0 092 990) betrifft eine Zusammensetzung, die

– ein Inokulum mit VA-Mykorrhiza-Pilzen,
– Torf,
– Pflanzensamen und
– ein Bindemittel,

wobei es der Sinn dieser Druckschrift ist, dass bereits die ersten Wurzeln der keimenden Pflanzen mit VA-Mykorrhiza-Pilzen infiziert werden. In diesem Falle besteht das Inokulum aus Pflanzenwurzeln, die mit VA-Mykorrhiza-Pilzen infiziert sind.

Alle aufgeführten Methoden haben folgende, teils gemeinsame gravierende Nachteile:

– sie sind ausserordentlich arbeitsaufwendig (Durchsieben von Böden, Aufbringen sehr grosser Inokulummengen, Aufbringung von Inkrustierungsmitteln und Rücktrocknung, Auspflanzen einer grossen Anzahl von Mutterpflanzen;

– die Inokula sind nur bedingt oder überhaupt nicht lagerfähige (Siebfraktionen, Pellets, viskose Medien);

– die Inokula sind an eine sehr spezielle Applikationstechnik mit hohem Aufwand gebunden (Flüssig-Drillverfahren).

Demgegenüber liegt vorliegender Erfindung die Aufgabe zugrunde, leicht handhabbare Inokula vesikulär-arbuskuläre Mykorrhizapilze herzustellen, die in grosser Menge angereichert und vor allem auch gelagert werden können. Es sollte möglich sein, sie auf einfache Weise zur Inokulation von Pflanzen zu verwenden.

Diese Aufgabe wird erfindungsgemäss bei einem Inokulum-Trägermaterial der eingangs genannten Gattung dadurch gelöst, dass der Inokulum-Träger ein Pflanzenwurzel-loses Adsorbens-Partikel ist, dessen innere Oberfläche grösser ist als dessen äussere Oberfläche.

Besondere Ausführungsformen sind dadurch gekennzeichnet,

dass der Inokulum-Träger einer spezifischen Desinfektion unterworfen wurde,

dass als Inokulum-Träger Bimsstein, Polystyrol, Bläh-Ton oder dergleichen verwendet wird.

Beansprucht wird weiterhin ein Verfahren zur Herstellung von erfindungsgemässen Inokulum-Trägermaterial, dadurch gekennzeichnet, dass man Pflanzen, deren Wurzeln mit vesikulär-arbuskulären Mykorrhizapilzen infiziert sind oder auf künstlichem Wege mit diesen infiziert wurden, mindestens 2 Wochen in dem Inokulum-Träger wachsen lässt.

Besondere Ausführungsformen dieses erfindungsgemässen Verfahrens sind dadurch gekennzeichnet,

dass man die Pflanzen wenigstens 8 Wochen wachsen lässt,

dass man die Pflanzen unter Langtagsbedingungen wachsen lässt,

dass man die Pflanzen während des Tages bei einer Lichtstärke von mehr als 5000 Lux, vorzugsweise mehr als 10 000 Lux, wachsen lässt,

dass man vesikulär-arbuskuläre Mykorrhizapilze unter sterilen Bedingungen auf die Pflanzenwurzeln überträgt und

dass man selektiv eine bestimmte Art der Mykorrhizapilze auf Pflanzenwurzeln überträgt.

Weitere besondere Ausführungsformen des erfindungsgemässen Verfahrens sind dadurch gekennzeichnet,

dass man als zu inokulierende Pflanzen höchstens 2 Monate alte Kulturpflanzen verwendet,

dass man Mykorrhizapilze unter unsterilen Bedingungen auf die Pflanzenwurzeln überträgt,

dass man die erhaltenen Inokulum-Träger, an die die Mykorrhizapilze gebunden sind, mit Hilfe geeigneter Desinfektionsmittel von unerwünschten Keimen, Sporen, Pilzen und dergleichen dekontaminiert und

dass man die Pflanzen nach der Wachstumsperiode auf dem Inokulum-Träger entweder mit oder ohne Wurzeln entfernt und auf dem Inokulum-Träger gegebenenfalls eine andere Pflanze wachsen lässt. Das vorliegende Inokulum – bestehend aus Blähton, Myzel und Sporen – ist auch völlig ohne Wurzeln und Wurzelreste wirksam; vorhandene Reste von Kulturpflanzen behindern nicht die Wirkung, bergen jedoch eine erhöhte Gefahr der Verschleppung von Kontaminationen. Wurzeln sollen daher bestimmungsgemäss weitgehend entfernt werden.

Beansprucht wird weiterhin die Verwendung des erfindungsgemässen Inokulum-Trägermaterials zur Inokulierung von Pflanzen.

Besondere Ausführungsformen dieser Verwendung sind dadurch gekennzeichnet,

dass man die Inokula mit Hilfe herkömmlicher Düngerstreuer oder anderer geeigneter praxisüblicher Geräte mechanisch ausbringt,

dass die Applikation mit Hilfe geeigneter landwirtschaftlicher Geräte bis zu 20 cm tief in dem Erdboden erfolgt und

dass die Ausbringung höchstens 3 Wochen vor der Aussaat oder dem Kulturbeginn und spätestens 8 Wochen nach der Aussaat bzw. dem Kulturbeginn erfolgt.

Die Erfindung ermöglicht erstmalig die Einbringung von VA Mykorrhizapilzen mit spezifischer Anpassung an die betreffenden Anbauverhältnisse und Kulturansprüche in der breiten landwirtschaftlichen und gartenbaulichen Praxis. Diese Anwendung hat das Ziel, die Ertragsleistung von Kulturen (u.a. Erhöhung der Stressresistenz und Vitalität von Nutzpflanzen, Förderung der Nährstoffausnutzung) durch eine gezielte Verbesserung der Mykorrhizierung zu sichern.

Es wurde somit gefunden, dass Adsorbentien ein Medium darstellen, mit deren Hilfe Mykorrhizapilze auf einfache Weise angereichert und gelagert werden können. Dies ist offenbar darauf zurückzuführen, dass die Sporen und möglicherweise auch andere Organe der Mykorrhizapilze in den Poren der Adsorbentien überlebensfähig sind. Entscheidend ist, dass das Inokulum dieser Pilze von den Wirtspflanzen getrennt wird. Es wird selektiv in den Adsorbentien angereichert und zeichnet sich durch eine sehr hohe Wirksamkeit aus:

So wurde beispielsweise bei Wintergerste eine Steigerung der Wurzellänge insgesamt pro Volumeneinheit und eine 60%ige Steigerung der mykorrhizahaltigen Wurzeln durch Inokulation mit dem erfindungsgemässen Material erzielt.

Eine verstärkte Mykorrhizierung wurde im gesamten Verlauf der Vegetationsperiode beobachtet.

Die Verwendung erfindungsgemässen Inokulum-Trägermaterials bewirkt (verglichen mit trägerfreiem Inokulum sowohl Sporenfraktionen als auch Wurzeln) eine Beschleunigung der Mykorrhizierung der Pflanzen und eine Erhöhung des Anteils mykorrhizahaltiger Wurzeln.

Die Anwendung von erfindungsgemässen Inokulum-Trägermaterial bewirkte sowohl bei niedrigem wie auch bei hohem Düngungsgrad eine Verbesserung des Wachstums von Maispflanzen.

Die Mykorrhizierung stimuliert die Anpassung von Pflanzen an ungünstige Umwelt-Bedingungen und erhöht ihre Stress-Toleranz, begünstigt das Auswachsen von Ablegern und Setzlingen, fördert die vegetative Entwicklung von Wirtspflanzen und das Blühen und Vermehren von Wirtspflanzen.

Auch verschiedene Getreidearten unter unterschiedlichsten Bodenbedingungen erleben eine verstärkte Mykorrhizierung durch Inokulation mit erfindungsgemässem Material.

Faseriges Adsorptionsmaterial wie Torf, Stein- oder Mineralwolle ist für den erfindungsgemässen Zweck ungeeignet.

Gegenstand der vorliegenden Erfindung sind somit Adsorbentien zur Inokulation von Pflanzen mit vesikulär-arbuskulären Mykorrhizapilzen, Verfahren zu ihrer Herstellung und ihre Verwendung zur Inokulation von Pflanzen.

Erfindungsgemäss eignen sich alle vesikulär-arbuskulären Mykorrhizapilze, deren systematische Zuordnung in den Artikeln von J.W. Gerdemann und J.M. Trappe, Mycologia Mem. 5, 1–76 (1974) und J.M. Trappe und N.C. Schenck in N.C. Schenck «Methods and Principles of Mycorrhizal Research», The American Phytopathological Society, St. Paul, USA, 1982, beschrieben sind.

Typische Vertreter der vesikulär-arbuskulären Mykorrhizapilze finden sich in den Gattungen Glomus, Accaulospora, Gigaspora und Sclerocystis (vgl. S.M. Mertz et al., Trans. Br. mycol. Soc. 72, 167 (1979). Beispielhaft seien folgende Vertreter aufgeführt: Glomus etunicatum, Glomus fasciculatum, Glomus macrocarpum, Glomus mosseae oder Acaulospore laevis.

Wenn also im Rahmen dieser Erfindung vereinfachend von Mykorrhizapilzen die Rede ist, dann sind stets die hier genannten anzunehmen.

Als Wirtpflanzen der Mykorrhizapilze kommen im Prinzip alle Pflanzen infrage, die zur Mykorrhizabildung befähigt sind. Nach dem heutigen Stand der Wissenschaft ist bekannt, dass eigentlich nur Pflanzen, die zu den Familien der Cruciferen und Chenopodiaceen gehören, nicht in der Lage sind, eine Symbiose mit Mykorrhizapilzen einzugehen. Wenn also im Rahmen dieser Erfindung einfach von Wirtspflanzen oder Pflanzen die Rede ist, dann sind diese Begriffe im Rahmen der hier gemachten Einschränkungen zu verstehen.

Erfindungsgemäss werden Sämlinge oder ganz allgemein Jungpflanzen bevorzugt, die weniger als 2 Monate alt sind. Diese Kennzeichnung gilt sowohl für die Pflanzen, mit deren Hilfe der Mykorrhizapilz vermehrt werden soll, als auch für die zu inokulierenden Pflanzen.

Die Infektion der Pflanzen, die in dem Inokulum-Träger wachsen sollen, kann beispielsweise mit Hilfe von Sporen, Aussenmycelien, infizierten Pflanzenwurzeln sowie mit Hilfe von Adsorbentien erfolgen, die nach dieser Erfindung erhalten werden. Die Infektion von Pflanzen mit dem Mykorrhizapilz wird in dem Standardwerk von Harley und Smith «Mycorrhizal Symbiosis», Academic Press, 1983) beschrieben.

Die mykorrhizahaltigen Pflanzen werden in ein mögliches Inokulum-Trägermaterial übertragen. In diesen Kultursubstraten entwickeln sich die Pilze sowohl in den Wurzeln der jeweiligen Pflanzen als auch an und in den jeweiligen Adsorbentien. In diesen Adsorbentien lassen sich bereits nach kurzer Kulturdauer (ca. 2 bis 3 Wochen) Mykorrhizapilze nachweisen. Die mit infektiösem Mykorrhizainokulum angereicherten Adsorbentien können über längere Zeiträume problemlos gelagert werden. Unter kontrollierten reproduzierbaren Anzuchtbedingungen ist die Inokulumproduktion auf Basis dieser Adsorbentien leicht standardisierbar, so dass bei der Verwendung dieser Adsorbentien ein definiertes Inokulumpotential leicht einstellbar ist.

Das Kultursubstrat, der Inokulum-Träger, in dem die Wirtspflanzen erfindungsgemäss wachsen sollen, ist durch seinen Gehalt an Adsorbentien gekennzeichnet. Die günstigste Anwendungsform besteht darin, ein Kultursubstrat zu verwenden, das ausschliesslich aus Adsorbentien besteht. Als Adsorbentien kommen Materialien infrage, die eine poröse Struktur aufweisen. Je höher der Porenvolumenanteil ist, um so eher ist ein Material geeignet. Vorzugsweise handelt es sich um ein chemisch weitgehend inertes Material, das für die Pflanzenwurzeln nicht toxisch ist. Demgegenüber ist es von untergeordneter Bedeutung, ob das Material anorganischer oder organischer Art, natürlicher oder synthetischer Herkunft ist.

Beispielsweise für Stoffe anorganischer Art sind beispielsweise Kieselgel, Bleicherden, sekundäre Tonmineralien und aktivierter Bauxit. Vorzugsweise wird Bimsstein oder Blähton, der insbesondere gebrochen ist, mit folgenden Eigenschaften eingesetzt:

| | |
|---|---|
| Körnung | 4–8 mm |
| Wasseraufnahme | 80–150 ml/l Blähton |
| pH-Wert in Wasserauszug des gemahlenen Materials | 5–7 |
| lösliche Salze (berechnet als KCl) | $<0{,}25$ g/100 g Blähton |

Daneben kommen auch organische Stoffe, wie poröse Kunststoffe (Polystyrol), infrage. Ungeeignet sind faserige Stoffe, wie Stein- und Mineralwolle.

Das Kultursubstrat kann neben den beschriebenen Adsorbentien, Inokulum-Trägern, folgende Komponenten enthalten: Sand, Erde, Einheitserde, Torfersatzsubstrate, organisches oder anorganisches Material aller Art.

Die Mykorrhizapilze wachsen am besten bei Temperaturen zwischen 18 und 30 °C. Der durch die Mykorrhizainokulation erreichte Effekt ist am deutlichsten erkennbar, wenn für die Pflanze ein relativer Nährstoffmangel hinsichtlich eines Nährstoffes, beispielsweise Phosphat, besteht. Dabei bezieht sich der Ausdruck Mangel ausdrücklich auf das für die Pflanze verfügbare Nährstoffangebot des Bodens. Jedoch ist ein wirksamer Effekt auf Pflanzenwachstum und -vitalität auch bei hoher landwirtschaftlicher und gartenbaulicher Anbauintensität zu beobachten, sofern geeignete, an diese Bedingungen adaptierte VA Mykorrhizapilze eingebracht werden.

Ferner ist bekannt, dass bestimmte Wirkstoffe, die in den Stoffwechsel der Pflanzen eingreifen, auf die Mykorrhizabildung stimulierend einwirken. In Kombination mit geeigneten VA Mykorrhizapilzen kann die Anwendung solcher Wirkstoffe (z.B. Wachstumsregulatoren) zu einer erhöhten Effizienz und verbesserten biologischen Wirkung der Symbiose beitragen.

Man sollte die Wirtspflanzen wenigstens 2 Wochen in dem Kultursubstrat wachsen lassen, damit es zu einer nennenswerten Anreicherung von Sporen und Mycelien in den Adsorbentien kommt. Vorzugsweise sollten die Pflanzen mindestens 6 Wochen in dem Kultursubstrat wachsen. Je länger man die Pflanzen wachsen lässt, um so mehr reichern sich die Mykorrhizapilze in den Adsorbentien an. Andererseits gibt es aber auch einen Grenzwert, über den hinaus keine weitere Anreicherung stattfindet. Eine zu lange Wachstumsperiode widerspricht auch wirtschaftlichen Erwägungen. In der Praxis wird man daher die günstigste Wachstumszeit für die jeweilige Wirtspflanze und den betreffenden VA-Mykorrhizapilz unter den jeweiligen Wachstumsbedingungen durch einfache Vergleichsversuche ermitteln.

Man kann die Pflanzen sowohl im Freien als auch in Gewächshäuern oder Klimakammern wachsen lassen. In der Regel wird die Anzucht der Pflanzen wegen der besseren Reproduzierbarkeit der Ergebnisse unter kontrollierten Bedingungen im Gewächshaus oder in einer Klimakammer vorgenommen.

Man zieht die Pflanzen vorzugsweise unter Langtagsbedingungen, d.h. die Lichtperiode in einem 24-Stunden-Rhythmus liegt zwischen 12 und 18 Stunden, die Dunkelperiode dementsprechend zwischen 12 und 6 Stunden.

Die Assimilationsleistung der Pflanze beeinflusst die Bildung und Wirksamkeit der Symbiose.

Die Assimilation sollte daher durch ausreichende Belichtung gefördert werden.

Die auf die Pflanzen einwirkende Lichtstärke soll mehr als 5000 Lux, vorzugsweise mehr als 10 000 Lux, betragen.

Es ist bekannt, dass die Wurzeln von Pflanzen, je nach Art des Mediums, in dem sie wachsen, nicht nur mit verschiedenen Arten von VA Mykorrhizapilzen infiziert, sondern auch mit einer Reihe anderer pflanzlicher Organismen unterschiedlicher Herkunft kontaminiert sein können, von denen eine Vielzahl eine schädigende Wirkung auf die Pflanzen ausüben können.

Das vorliegende Verfahren gestattet es nun, die Pflanzen unter weitgehend kontaminationsfreien Bedingungen heranzuziehen. Inokula können also unter sterilen als auch unter unsterilen Bedingungen produziert werden. Im letzteren Fall zeichnet sich das so gewonnene Inokulum durch ausserordentlich geringe Kontaminationsraten aus. Erforderlichenfalls lässt sich ein derartiges Inokulum auch durch geeignete Massnahmen, wie z.B. eine Behandlung mit Desinfektionsmitteln, dekontaminieren, ohne dass ein wesentlicher Infektionsverlust eintritt (z.B. Anwendung selektiver Fungizide). Eine Dekontamination wird vor allem von solchen Pathogenen angestrebt, die, wie z.B. Oomyceten, in Hydrokultursystemen zum Problem werden können.

Die Bedeutung der Dekontamination wird an folgendem Versuch deutlich:

Die Wurzeln junger Maispflanzen, die in Blähtonkulturen wuchsen, wurden mit Glomus etunicatum (VA Mykorrhizapilz) inokuliert und zusätzlich mit Pythium spec. infiziert. Im Laufe der folgenden 3 Monate entwickelten sich die symbiotische und der pathogene Pilz nebeneinander. Danach enthielt das Kultursubstrat Blähton Sporen beider Pilze. Eine erste Hälfte des Blähtons wurde nunmehr 2 Minuten mit wässrigem Ethanol behandelt, die andere Hälfte (Vergleichsprobe) wurde nicht behandelt. Anschliessend wurden beide Blähtonproben zur Inokulation von 4 Wochen alten Maispflanzen eingesetzt, die auf sandigem Boden wuchsen. Nach 6 Wochen wurde das Ausmass der Inokulation mit Glomus etunicatum und Infektion mit Pythium spec. mikroskopisch untersucht. Während die Maiswurzeln der Vergleichsprobe zu 53% Glomus etunicatum infiziert und zu 44% mit Pythium spec. infiziert waren, enthielten die Maiswurzeln der ersten Probe (Ethanolbehandlung des Blähtons) immerhin noch 36% mit Glomus etunicatum aber keine mit Pythium spec. infizierte Wurzeln. Der Versuch belegt anschaulich, dass durch Behandlung der Inokulumträger mit wässrigem Ethanol eine Dekontamination von infektiösen Pilzen möglich ist.

Schliesslich bietet das vorliegende Verfahren auch die Möglichkeit einer selektiven Übertragung einer Mykorrhizaart auf eine Pflanzenwurzel.

Durch die Anzucht von mykorrhizahaltigen Pflanzen in Adsorbentien erhält man Trägermaterialien, die mit infektiösem Mykorrhizainokulum besetzt sind. Nach Abtrennung des Pflanzenmaterial ist dieses Trägermaterial, wie experimentell belegt werden konnte, bei Raumtemperaturen ohne Abnahme ihrer Aktivität mindestens ein Jahr lagerfähig. Diese Adsorbentien können jetzt in sehr unterschiedlicher Form weiterverwendet werden.

Durch die Anzucht von mykorrhizahaltigen Pflanzen erhält man Adsorbentien, die mit infektiösem Mykorrhizainokulum infiziert sind und, wie experimentell belegt werden konnte, bei Raumtemperatur ohne Abnahme ihrer Aktivität mindestens ein Jahr gelagert werden können. Diese Adsorbentien können jetzt in sehr unterschiedlicher Form weiterverwendet werden.

So eignen sich die Adsorbentien z.B. für die mechanische Ausbringung mit handelsüblichen Geräten der Land- und Forstwirtschaft sowie des Gartenbaus (herkömmliche Düngerstreuer, Schleuder- oder Pendelstreuer, Unterfussdüngungsgeräte, Drill- oder Sämaschinen).

Neu ist, dass man Adsorbentien (Träger), an die die Mykorrhizapilze gebunden sind, mit Pflanzenwurzeln in Kontakt bringt. Dies erfolgt durch gezielte oder grossflächige Applikation der Adsorbentien, die vorzugsweise in die oberen Bodenschichten (vor allem 0 bis 10 cm) eingearbeitet bzw. unter die Saatreihen appliziert werden können. Bei Baumpflanzen kann die Einbringung auch in 1 m Tiefe und mehr erfolgen. Die Anwendung kann bis zu 3 Wochen vor Kulturbeginn, aber auch in späteren Entwicklungsstadien erfolgen.

Die Adsorbentien (Träger) können auf sehr unterschiedlichen Böden eingesetzt werden. Beispielhaft seien erwähnt: Landwirtschaftliche Böden aller Art, Topf- und Containerkultursysteme sowie Hydrokulturen (vgl. auch D.J. Bagyaray, A. Manjunath, New Phytol. 85, 33–36 (1980), Rekultivierungsflächen (z.B. des Braunkohlentagebaus).

Der wesentliche Vorteil dieser künstlichen Inokulation von Pflanzen besteht darin, dass mit geringem Aufwand die Mykorrhizabildung quantitativ gefördert und beschleunigt wird. Qualitativ kann eine günstige Beeinflussung von Pflanzenwachstum und Ertrag erzielt werden.

Eine Applikation biologischwirksamer und an die betreffenden Kulturbedingungen adaptierter VA-Mykorrhizapilze, die an Adsorbentien gebunden sind, ist mit herkömmlichen Praxisgeräten möglich. Dies zeigten Versuche mit Blähton (Grossenasperfeld) und Bimsstein (Dülmen) als Adsorbentien, die über ein Unterfussdüngungsgerät in gleicher Weise wie der ansonsten für die Unterfussdüngung verwendete NP-Dünger in Mais ausgebracht worden waren (vgl. Tabelle 1). Die Versuche waren randomisiert und vierfach wiederholt angelegt worden. Die Parzellengrösse betrug 50 m². Die Ablagetiefe der Adsorbentien mit den gebundenen Mykorrhizapilzen betrug wie beim herkömmlichen NP-Dünger 5 cm. Die Ablage erfolgte wie bei der Unterfussdüngung neben die Maisreihe. In Dülmen wurden die Adsorbentien noch zusätzlich in die Maisreihe abgelegt. Applikationszeitpunkt war wie bei der Unterfussdüngung Anfang Mai.

Die Ergebnisse sowohl in Grossenasperfeld als auch in Dülmen bestätigen, dass unter Verwendung normaler, für die Landwirtschaft üblicher Applikationsmethoden und bei Auswahl geeigneter Mykorrhizapilze, die an die Trägermaterialien gebunden sind, unter Praxisbedingungen deutliche Ertragssteigerungen z.B. in Mais möglich sind. In Grossenasperfeld konnten die Erträge (Trockensubstanz Kolben) um ca. 10 bis 15% durch Ausbringungen des Mykorrhizainokulums gesteigert werden. Zudem war der Mais in den Parzellen mit dem Mykorrhizainokulum noch bis Mitte September vom Fahnenblatt beginnend bis zu den untersten Blättern grün, während der nicht inokulierte Mais unter den Trockenbedingungen des Jahres 1983 deutliche Wassermangelsymptome zeigte, was sich durch frühzeitiges Abreifen mit entsprechender Gelbfärbung der Blätter bemerkbar machte. Der ertragssteigernde Effekt des Mykorrhizainokulums konnte sowohl für die gedüngten als auch für die nicht gedüngten Parzellen gezeigt werden. Durch alleinige Zugabe des Mykorrhizainokulums konnten die gleichen Erträge erzielt werden wie nach Düngung mit Diammoniumphosphat, die im Falle des Maisanbaus in Deutschland als Standardmassnahme anzusehen ist.

In Dülmen konnten ähnliche ertragssteigernde Effekte (Trockensubstanz Kolben) durch die Inokulation mit Mykorrhizapilzen nachgewiesen werden. Mit Mykorrhizapilzen wurden die gleichen Mehrerträge erzielt (ca. 20%) wie durch die Unterfussdüngung mit einem NP-Dünger ohne Mykorrhizainokulum.

Beispiel 1

Die mit Mykorrhizapilzen angereicheren Adsorbentien werden auf folgende Weise erhalten:

Die Wurzeln steril angezogener Maissämlinge (Alter 10 Tage) wurden mit oberflächensterilisierten Sporen von Glomus fasciculatum inokuliert und in Blähton- bzw. Bimssteinhydrokultur (durchschnittliche Korngrösse 3 mm) gezogen. Als Nährlösung für die Hydrokultur diente eine modifizierte Nährlösung nach Knop. Die modifizierte Nährlösung nach Knop wurde erhalten durch Vereinigung einer Nährlösung nach Knop mit 1 Volumenprozent einer Spurenelementlösung nach Hoagland.

a) Nährlösung nach Knop
Angaben für 1 Liter Nährlösung:

| | |
|---|---|
| $Ca(NO_3)_2 \cdot 4 H_2O$ | 1,0 g |
| $MgSO_4 \cdot 7 H_2O$ | 0,25 g |
| $KH_2PO_4$ | 0,25 g |
| $KNO_3$ | 0,25 g |
| KCl | 0,12 g |
| $FeCl_3 \cdot 6 H_2O$ | in Spuren |

b) Spurenelementlösung nach Hoagland
(aus: D.R. Hoagland, W.C. Snyder, Amer. Soc. horticult. Sci. 30 (1933) 288)
Angaben pro 18 Liter Wasser:

| | |
|---|---|
| $Al_2(SO_4)_3$ | 1,0 g |
| KJ | 0,5 g |
| KBr | 0,5 g |
| $TiO_2$ | 1,0 g |
| $SnCl_2 \cdot 2 H_2O$ | 0,5 g |
| LiCl | 0,5 g |
| $MnCl_2 \cdot 4 H_2O$ | 7,0 g |
| $H_3BO_3$ | 11,0 g |
| $ZnSO_4$ | 1,0 g |
| $CuSO_4 \cdot 5 H_2O$ | 1,0 g |
| $NiSO_4 \cdot 6 H_2O$ | 1,0 g |
| $Co(NO_3)_2 \cdot 6 H_2O$ | 1,0 g |

Die Maissämlinge wurden in einem Hydrokultursystem bei 15 000 Lux 14 Stunden kultiviert. Die Temperatur betrug 20 ± 2 °C. Nach 3 Monaten, als der Blähton bzw. Bimsstein mit den Maiswurzeln, in denen sich der Mykorrhizapilz entwickelt hatte, intensiv durchwachsen war, wurde der Mais einschliesslich seiner Wurzeln aus der Blähton- bzw. Bimsstein-Hydrokultur entfernt, indem die durchwurzelten Adsorbentien abgeschüttelt wurden. In den Hohlräumen der Adosrbentien reicherten sich die Sporen und Mycelien der Mykorrhizapilze an.

Freilandversuche mit den erhaltenen Adsorbentien:

Die mit Mykorrhizainokulum angereicherten Adsorbentien wurden über ein Unterfussdüngungsgerät in Maiskulturen im Freilandversuch ausgebracht. Pro Hektar wurden 50 kg Blähton bzw. Bimsstein als Mykorrhizainokulum appliziert.

Tabelle I

Kolbenerträge von Mais (Trockensubstanz in dt/ha) nach Applikation mit Blähton (Grossenasperfeld) und Bimsstein (Dülmen) als Adsorbentien, an die Mykorrhizapilze gebunden waren. Applikation der Adsorbentien mit einem herkömmlichen Unterfussdüngungsgerät (Freilandversuche 1983).

| | Blähton | Bimsstein |
|---|---|---|
| ohne Düngung ohne Mykorrhizabehandlung | 103 | 57 |
| ohne Düngung mit Mykorrhizabehandlung | 113 | 70 |
| mit NP-Dünger gedüngt ohne Mykorrhizabehandlung | 67 | 68 |
| mit NP-Dünger gedüngt mit Mykorrhizabehandlung | 116 | – |

Beispiel 2
Gewächshausversuch mit den Adsorbentien

Mais, Gurke, Bohen und Zwiebeln wurden unter Gewächshausbedingungen bei 20 °C und 15 000 Lux (14 Stunden) mit dem Mykorrhizapilz Glomus fasciculatum inokuliert, indem man Blähton wie in Beispiel 1 beschrieben als Inokulum herstellte und bei der Aussaat der Kulturpflanzen pro Kulturgefäss (Durchmesser 11 cm) jeweils 1 g Inokulum pro Liter Boden verwendete. Die Versuche zeigen, dass Blähton ein geeignetes Adsorbens für den Mykorrhizapilz darstellt, was an dem hohen Infektionsgrad erkennbar ist.

Vergleichbare Ergebnisse wurden mit Glomus constrictum erhalten.

Tabelle 2

Inokulation verschiedener Wirtspflanzen mit Blähton als Adsorbens für Glomus fasciculatum aus einjährigen Dauerkulturen (Pflanzenalter 6 Wochen, Inokulum 1 g/l)

| | % mykorrhizahaltige Wurzeln |
|---|---|
| Mais | 38,5 |
| Gurke | 18,7 |
| Bohne | 61,2 |
| Zwiebel | 64,7 |

Beispiel 3
Gewächshausversuch mit den Adsorbentien

Als mykorrhizahaltiges Adsorbens wurde Blähton verwendet, auf dem in analoger Weise wie in Beispiel 1 beschrieben, Glomus fasciculatum in Maiswurzeln bei 8wöchiger Kulturdauer gezogen worden war. Es wurden 3 Fraktionen unterschiedlicher Partikelgrössen eingesetzt. Als Versuchspflanze für die Inokulation mit dem mykorrhizahaltigen Blähton diente Mais. Die Inokulummenge betrug 15 g Blähton pro Liter Boden. Der Mais wurde 6 Wochen bei 20 °C (15 000 Lux und 15 Stunden) unter Gewächshausbedingungen angezogen. Anschliessend wurde der Infektionsgrad bestimmt. Die Ergebnisse zeigen, dass die Mykorrhizaentwicklung in dem untersuchten Bereich weitgehend unabhängig von der Partikelgrösse ist.

Tabelle 3

Infektiosität verschiedener Partikelgrössen von Blähton aus mykorrhizahaltigen Dauerkulturen (Dauerkulturen 8 Wochen alt, inokulierte Maispflanzen 6 Wochen alt)

| | % mykorrhizahaltige Wurzeln | | |
|---|---|---|---|
| | Partikelgrösse <2 mm | Partikelgrösse 3,5 mm | Partikelgrösse >5 mm |
| Glomus fasciculatum | 48,0 | 52,5 | 56,3 |

Beispiel 4

Als mykorrhizahaltiges Adsorbens (Glomus fasciculatum) wurde Blähton verwendet, der in analoger Weise wie in Beispiel 1 hergestellt worden war.

Pelargonium zonale (Geranie) wurde in Sand bzw. in einem Torfersatzsubstrat («Hornoflor») unter Gewächshausbedingungen (Temperatur 20 °C, Belichtung 15 Stunden mit 15 000 Lux) kultiviert, wobei als Mykorrhizainokulum Blähton in unterschiedlichen Mengen in den Boden gemischt wurde. Nach 11wöchiger Inkubation wurde die Länge der Pflanzen im Vergleich zur unbehandelten Kontrollgruppe gemessen. Wie Tabelle 4 zeigt, wurde das Längenwachstum von Pelargonium zonale durch mykorrhizahaltiges Inokulum sowohl in Sand als auch im Torfersatzsubstrat stimuliert. Die Höhe der verwendeten Blähton-Inokulummenge hatte keine zusätzliche Bedeutung, da bereits bei der geringsten Inokulummenge die gleiche Stimulierung wie bei der vierfache Inokulummenge beobachtet wurde. Das Beispiel belegt ferner, dass mykorrhizatypische Eigenschaft, das Wachstum zu fördern, mit Hilfe von Adsorbentien, wie Blähton, auf Pflanzen übertragen werden kann.

Tabelle 4
Längenwachstum (cm) mykorrhizahaltiger und mykorrhizafreier *Pelargonium zonale* «Paul Götz» in den Substraten Sand und Torfersatzsubstrat nach Inokulation mit 5, 10 und 20 Vol-% Blähton-Inokulum, 11 Wochen nach Inokulation

| Substrat | Isolat | Blähton – Aufwandmenge (Vol.-%) | | | $CD_{0,05}$ |
|---|---|---|---|---|---|
| | | 5 | 10 | 20 | |
| Sand | Mykorrhiza-behandlung | 10,0** | 10,0** | 9,8** | 2,2 |
| | Kontr. | 7,0 | 7,1 | 6,9 | 1,9 |
| Hornoflor | Mykorrhiza-behandlung | 9,1* | 10,1** | 8,9* | 1,6 |
| | Kontr. | 7,8 | 7,9 | 7,2 | 1,5 |

\*   Wert bei $P \leq 0,05$ verschieden vom Wert der entspr. Kontrolle
\*\* Wert bei $P \leq 0,01$ verschieden vom Wert der entspr. Kontrolle

## Patentansprüche

1. Inokulum-Trägermaterial zur Inokulation von Pflanzen mit vesikulär-arbuskulären Mykorrhizapilzen, dadurch gekennzeichnet, dass der Inokulum-Träger ein Pflanzenwurzel-loses Adsorbens-Partikel ist, dessen innere Oberfläche grösser ist als dessen äussere Oberfläche.

2. Inokulum-Trägermaterial zur Inokulation von Pflanzen mit vesikulär-arbuskulären Mykorrhizapilzen gemäss Anspruch 1, dadurch gekennzeichnet, dass der Inokulum-Träger einer spezifischen Desinfektion unterworfen wurde.

3. Inokulum-Trägermaterial gemäss Ansprüchen 1 und 2, dadurch gekennzeichnet, dass als Inokulum-Träger Bimsstein, Polystyrol, Bläh-Ton oder dergleichen verwendet wird.

4. Verfahren zur Herstellung von Inokulum-Trägermaterial gemäss Ansprüchen 1 bis 3, dadurch gekennzeichnet, dass man Pflanzen, deren Wurzeln mit vesikulär-arbuskulären Mykorrhizapilzen infiziert sind oder auf künstlichem Weg mit diesen infiziert wurden mindestens 2 Wochen in dem Inokulum-Träger wachsen lässt.

5. Verfahren gemäss Anspruch 4, dadurch gekennzeichnet, dass man die Pflanzen wenigstens 8 Wochen wachsen lässt.

6. Verfahren gemäss Ansprüchen 4 bis 5, dadurch gekennzeichnet, dass man die Pflanzen unter Langtagsbedingungen wachsen lässt.

7. Verfahren gemäss Ansprüchen 4 bis 6, dadurch gekennzeichnet, dass man die Pflanzen während des Tages bei einer Lichtstärke von mehr als 5000 Lux, vorzugsweise mehr als 10 000 Lux, wachsen lässt.

8. Verfahren gemäss Ansprüchen 4 bis 7, dadurch gekennzeichnet, dass man vesikulär-arbuskuläre Mykorrhizapilze unter sterilen Bedingungen auf die Pflanzenwurzeln überträgt bzw. inokuliert.

9. Verfahren gemäss Ansprüche 4 bis 8, dadurch gekennzeichnet, dass man selektiv eine bestimmte Gattung oder Art der Mykorrhizapilze auf Pflanzenwurzeln überträgt.

10. Verfahren gemäss Ansprüche 8 bis 9, dadurch gekennzeichnet, dass man als zu inokulierende Pflanzen höchstens 2 Monate alte Kulturpflanzen verwendet.

11. Verfahren gemäss Ansprüchen 4 bis 7 und 10, dadurch gekennzeichnet, dass man Mykorrhizapilze unter unsterilen Bedingungen auf die Pflanzenwurzeln überträgt.

12. Verfahren gemäss Ansprüchen 4 bis 11, dadurch gekennzeichnet, dass man die erhaltenen Inokulum-Träger, an die die Mykorrhizapilze gebunden sind, mit Hilfe geeigneter Desinfektionsmittel von unerwünschten Keimen, Sporen, Pilzen und dergleichen dekontaminiert.

13. Verfahren gemäss Ansprüchen 1 bis 12, dadurch gekennzeichnet, dass man die Pflanzen nach der Wachstumsperiode entweder mit oder ohne Wurzeln entfernt und auf dem Inokulum-Trägermaterial gegebenenfalls eine andere Pflanze wachsen lässt.

14. Verwendung des Inokulum-Trägermaterials gemäss Ansprüchen 1 bis 3 zur Inokulierung von Pflanzen.

15. Verwendung gemäss Anspruch 14, dadurch gekennzeichnet, dass man das Inokulum-Trägermaterial mit Hilfe herkömmlicher Düngerstreuer oder anderer geeigneter praxisüblicher Geräte mechanisch ausbringt.

16. Verwendung gemäss Anspruch 14, dadurch gekennzeichnet, dass die Applikation mit Hilfe geeigneter landwirtschaftlicher Geräte bis zu 20 cm tief in den Erdboden erfolgt.

17. Verwendung gemäss Ansprüchen 14 bis 16, dadurch gekennzeichnet, dass die Ausbringung höchstens 3 Wochen vor der Aussaat oder dem Kulturbeginn und spätestens 8 Wochen nach der Aussaat bzw. dem Kulturbeginn erfolgt.

## Claims

1. Inoculum carrier for the inoculation of plants with vesicular-arbuscular mycorrhiza, characterized by the inoculum carrier being a non-plant- root-containing adsorbent particle, the internal surface of which is larger than the external surface.

2. Inoculum carrier for the inoculation of plants with vesicular-arbuscular mycorrhiza according to claim 1, characterized by the inoculum carrier having undergone a specific disinfection procedure.

3. Inoculum carrier according to claims 1 and 2, characterized by the inoculum carrier used being pumice stone, polystyrene, porous clay granules or a similar material.

4. Procedure for the production of inoculum carrier according to claims 1 to 3, characterized by letting plants the roots of which are carrying vesicular-arbuscular mycorrhiza or have been artificially inoculated with these, grow for a minimum of 2 weeks in the inoculum carrier.

5. Procedure according to claim 4, characterized by letting the plants grow for a minimum of 8 weeks.

6. Procedure according to claims 4 and 5, characterized by letting the plants grow in long-day conditions.

7. Procedure according to claims 4 to 6, characterized by letting the plants grow during day light hours at a light intensity of more than 5000 Lux, preferably more than 10 000 Lux.

8. Procedure according to claims 4 to 7, characterized by transferring or inoculating the vesicular-arbuscular myorrhiza on to the plant roots under sterile conditions.

9. Procedure according to claims 4 to 8, characterized by the selective transfer of a certain genus or species of mycorrhiza to the plant roots.

10. Procedure according to claims 8 to 9, characterized by the plants to be inoculated being cultivated plants with a maximum age of 2 months.

11. Procedure according to claims 4 to 7 and 10, characterized by applying the mycorrhiza to the plant roots in non-sterile conditions.

12. Procedure according to claims 4 to 11, characterized by the inoculum carrier thus obtained, to which the mycorrhiza are attached, being decontaminated by the use of suitable disinfectants for the eradication of unwanted germs, spores, fungi or the like.

13. Procedure according to claims 1 to 12, characterized by removing the plants after the growing period either with or without their roots and, if appropriate, letting another plant grow on the inoculum carrier.

14. Application of the inoculum carrier according to claims 1 to 3 for the inoculation of plants.

15. Application according to claim 14, characterized by the application of the inoculum carrier mechanically by means of the usual fertilizer spreaders or other suitable machinery in customary use.

16. Application according to claim 14, characterized by the application being incorporated into the soil down to a depth of 20 cm with the aid of suitable agricultural implements.

17. Application according to claims 14 to 16, characterized by the application taking place a maximum of 3 weeks before the sowing or planting date or not more than 8 weeks after sowing or planting.

## Revendications

1. Matière de support d'inoculum pour inoculer à des plantes des mycorrhizes arbusculaires vésiculaires, caractérisée en ce que le support d'inoculum est une particule adsorbante sans racines végétales, dont la surface intérieure est plus grande que sa surface extérieure.

2. Matière de support d'inoculum pour inoculer à des plantes des mycorrhizes arbusculaires vésiculaires selon la revendication 1, caractérisée en ce que le support d'inoculum a été soumis à une désinfection spécifique.

3. Matière de support d'inoculum selon les revendications 1 et 2, caractérisée en ce qu'on utilise, comme support d'inoculum, de la pierre ponce, du polystyrène, de l'argile gonflée ou une matière analogue.

4. Procédé de production de matière de support d'inoculum selon les revendications 1 à 3, caractérisé en ce qu'on laisse pousser au moins deux semaines dans le support d'inoculum des plantes dont les racines sont infectées de mycorrhizes arbusculaires vésiculaires ou en ont été infectés artificiellement.

5. Procédé selon la revendication 4, caractérisé en ce qu'on laisse pousser les plantes au moins 8 semaines.

6. Procédé selon les revendications 4 et 5, caractérisé en ce qu'on laisse pousser les plantes dans des conditions de jour prolongé.

7. Procédé selon les revendications 4 à 6, caractérisé en ce qu'on laisse pousser les plantes pendant la journée à une intensité lumineuse de plus de 5000 lux, de préférence de plus de 10 000 lux.

8. Procédé selon les revendications 4 à 7, caractérisé en ce qu'on transfert ou l'on inocule aux racines des plantes des mycorrhizes arbusculaires vésiculaires dans des conditions stériles.

9. Procédé selon les revendications 4 à 8, caractérisé en ce qu'on transplante sélectivement un genre ou une espèce déterminée des mycorrhizes sur les racines de plantes.

10. Procédé selon les revendications 8 et 9, caractérisé en ce qu'on utilise des plantes de culture âgées de 2 mois au plus, comme plantes à inoculer.

11. Procédé selon les revendications 4 à 7 et 10, caractérisé en ce qu'on transplante des mycorrhizes sur les racines des plantes dans des conditions stériles.

12. Procédé selon les revendications 4 à 11, caractérisé en ce qu'on débarrasse les supports d'inoculum obtenus, auxquels sont fixés les mycorrhizes à l'aide de désinfectants appropriés, de germes, spores, champignons et analogues, non souhaités.

13. Procédé selon les revendications 1 à 12, caractérisé en ce qu'on retire les plantes après la période de croissance avec ou sans racines et on laisse pousser sur la matière de support d'inoculum éventuellement une autre plante.

14. Utilisation de la matière de support d'inoculum selon les revendications 1 à 3 pour l'inoculation de plantes.

15. Utilisation selon la revendication 14, caractérisée en ce qu'on applique mécaniquement la matière de support d'inoculum à l'aide de distributeurs d'engrais courant ou d'autres appareils appropriés usuels dans la pratique.

16. Utilisation selon la revendication 14, caractérisée en ce que l'application est effectuée à l'aide d'instruments agricoles appropriés à une profondeur pouvant atteindre 20 cm dans le sol.

17. Utilisation selon les revendications 14 à 16, caractérisée en ce que l'épandage a lieu au plus trois semaines avant les semailles ou le début de la culture et au plus tard 8 semaines après les semailles ou le début de la culture.